# EUROPEAN PATENT APPLICATION

(11) **EP 4 283 765 A1**
(43) Date of publication of application: **29.11.2023**
(21) Application number: 22856151.0
(22) Date of filing: 08.08.2022
(51) Int. Cl.: H01M 50/167, H01M 50/133, H01M 50/107, H01M 50/152, H01M 50/559, H01M 50/567, H01M 50/538, H01M 50/342, H01M 50/204, H01M 50/249

(54) **CYLINDRICAL SECONDARY BATTERY CELL, AND BATTERY PACK AND VEHICLE INCLUDING SAME**

(30) Priority: 13.08.2021 KR 20210107670; 29.10.2021 KR 20210147361; 19.07.2022 KR 20220089206
(71) Applicant: LG Energy Solution, Ltd., Seoul 07335 (KR)
(72) Inventor: JO, Min-Ki, Daejeon 34122 (KR); KANG, Bo-Hyun, Daejeon 34122 (KR); KIM, Do-Gyun, Daejeon 34122 (KR); CHOI, Su-Ji, Daejeon 34122 (KR); HWANGBO, Kwang-Su, Daejeon 34122 (KR)
(74) Representative: Goddar, Heinz J.
(86) International application number: PCT/KR2022/011796
(87) International publication number: WO 2023/018154

(57) **Abstract**

A cylindrical secondary battery according to an embodiment of the present disclosure includes an electrode assembly including a first uncoated region having a first polarity and a second uncoated region having a second polarity, a battery can accommodating the electrode assembly, the battery can electrically connected to the second uncoated region and having different thicknesses for each location, a penetrating terminal electrically connected to the first uncoated region through a surface of the battery can, and a cap plate configured to close an open portion of the battery can.

## Description

### TECHNICAL FIELD

The present disclosure relates to a cylindrical secondary battery, and a battery pack and a vehicle comprising the same. More particularly, the present disclosure relates to a cylindrical secondary battery having a structure in which a positive electrode terminal and a negative electrode terminal are arranged close to each other on one side of the cylindrical secondary battery without greatly changing the structure of the existing cylindrical secondary battery, and a battery pack and a vehicle comprising the same.

The present application claims priority to Korean Patent Application No. 10-2021-0107670 filed on August 13, 2021 in the Republic of Korea, and Korean Patent Application No. 10-2021-0147361 filed on October 29, 2021 in the Republic of Korea, and Korean Patent Application No. 10-2022-0089206 filed on July 19, 2022, the disclosures of which are incorporated herein by reference.

### BACKGROUND ART

When manufacturing a battery pack using cylindrical secondary batteries, in general, the plurality of cylindrical secondary batteries is placed upright in a housing and electrically connected to each other using the top and bottom of the cylindrical secondary battery as a positive electrode terminal and a negative electrode terminal, respectively.

In the cylindrical secondary battery, a negative electrode uncoated region of an electrode assembly received in a battery can is extended down and electrically connected to the bottom of the battery can, and a positive electrode uncoated region is extended up and electrically connected to a top cap. That is, in the cylindrical secondary battery, it is general that the bottom of the battery can is used as the negative electrode terminal, and the top cap that covers the top opening of the battery can is used as the positive electrode terminal.

However, when the positive electrode terminal and the negative electrode terminal of the cylindrical secondary battery are disposed on the opposite sides, it is necessary to apply an electrical connection component for electrically connecting the plurality of cylindrical secondary batteries such as a busbar to both the top and bottom of the cylindrical secondary battery. This makes the electrical connection structure of the battery pack complex.

Besides, under this structure, components for insulation and components for waterproofing and sealability should be individually applied to the top and bottom of the battery pack, causing the increased number of components applied and structural complexity.

Accordingly, there is a need for the development of a cylindrical secondary battery having a structure in which the positive electrode terminal and the negative electrode terminal are applied in the same direction to simplify the electrical connection structure of the plurality of cylindrical secondary batteries.

### DISCLOSURE

### Technical Problem

The present disclosure is designed to solve the above-described problem, and therefore the present disclosure is directed to providing a cylindrical secondary battery structure having a structure in which a positive electrode terminal and a negative electrode terminal are applied in the same direction.

The present disclosure is directed to providing a cylindrical secondary battery with sufficient area for welding between an electrical connection component for manufacturing a battery pack such as a busbar and an electrode terminal of the cylindrical secondary battery when electrically connecting a plurality of cylindrical secondary batteries.

The present disclosure is directed to providing a cylindrical secondary battery with improved sealability of a battery can by adjusting the thickness of the battery can for each location.

The present disclosure is directed to providing a cylindrical secondary battery with improved energy density by adjusting the thickness of the battery can for each location.

However, the technical problem of the present disclosure to be solved is not limited to the above-described problem, and these and other problems will be clearly understood by those skilled in the art from the following description.

### Technical Solution

To solve the above-described problem, a cylindrical secondary battery according to an embodiment of the present disclosure includes an electrode assembly including a first uncoated region having a first polarity and a second uncoated region having a second polarity; a battery can accommodating the electrode assembly, the battery can electrically connected to the second uncoated region and having different thicknesses for each location; a penetrating terminal electrically connected to the first uncoated region through a surface of the battery can; and a cap plate configured to close an open portion of the battery can.

The battery can may include a beading portion formed on the open portion side of the battery can and formed by inward beading around an outer circumferential surface of the battery can; and a crimping portion formed below the beading portion and configured to fix the cap plate.

The crimping portion may be disposed around an edge area of the cap plate, and may be extended and bent to cover at least a part of a lower surface of the cap plate.

The cylindrical secondary battery may further include a sealing gasket interposed between the crimping portion of the battery can and the cap plate.

An area of the crimping portion that covers the lower surface of the cap plate may be thicker than a remaining area of the crimping portion.

An area of the crimping portion that cover the lower surface of the cap plate may include a flat area.

A total area of the crimping portion that covers the edge area of the cap plate may be thicker than a remaining sidewall of the battery can.

The beading portion and the crimping portion may be thicker than a remaining sidewall of the battery can.

A sidewall of the battery can may be thinner than a closed portion of the battery can.

The penetrating terminal may be disposed at a center of a surface of the battery can disposed opposite the open portion.

The penetrating terminal may include a terminal exposure portion extending outward from the battery can; and a terminal insertion portion penetrating an upper surface of the battery can.

The cylindrical secondary battery may further include an insulation gasket interposed between the battery can and the penetrating terminal to electrically insulate the penetrating terminal from the battery can.

The insulation gasket may include a gasket exposure portion extending outward from the battery can; and a gasket insertion portion penetrating an upper surface of the battery can.

The penetrating terminal may be rivet-coupled onto an inner surface of the battery can.

The cylindrical secondary battery may further include a first current collector plate having a first surface coupled to the first uncoated region and a second surface coupled to the penetrating terminal.

The penetrating terminal may include a terminal exposure portion extending outward from the battery can; and a terminal insertion portion penetrating an upper surface of the battery can.

A central area of the terminal insertion portion may be coupled to the first current collector plate.

The cylindrical secondary battery may further include an insulator interposed between the first current collector plate and the battery can.

The penetrating terminal may be coupled to the first current collector plate through the insulator.

At least one of the first uncoated region or the second uncoated region may be bent toward a winding center of the electrode assembly.

The cap plate may include a venting portion which ruptures to force gas out when an internal pressure of the battery can rises above a predetermined level.

The cap plate may be electrically insulated from the electrode assembly and is non-polar.

Meanwhile, a battery pack according to an embodiment of the present disclosure includes a plurality of cylindrical secondary batteries according to an embodiment of the present disclosure; and a pack housing accommodating the plurality of cylindrical secondary batteries.

A vehicle according to an embodiment of the present disclosure includes the battery pack according to an embodiment of the present disclosure.

### Advantageous Effects

According to the present disclosure, it is possible to provide a cylindrical secondary battery structure having a structure in which a positive electrode terminal and a negative electrode terminal are applied in the same direction, thereby simplifying an electrical connection structure of a plurality of cylindrical secondary batteries.

According to the present disclosure, it is possible to provide a sufficient area for welding between the electrode terminal of the cylindrical secondary battery and an electrical connection component such as a busbar, thereby ensuring sufficient joining strength between the electrode terminal and the electrical connection component and reducing the resistance at the welded part between the electrical connection component and the electrode terminal down to a desirable level.

According to the present disclosure, it is possible to improve the sealability of the battery can by adjusting the thickness of the battery can for each location.

According to the present disclosure, it is possible to improve the energy density by adjusting the thickness of the battery can for each location.

### BRIEF DESCRIPTION OF THE DRAWINGS

The accompanying drawings illustrate an exemplary embodiment of the present disclosure, and together with the detailed description of the present disclosure described below, serve to provide a further understanding of the technical aspects of the present disclosure, and thus the present disclosure should not be construed as being limited to the drawings.
FIG. 1 is a diagram showing the appearance of a cylindrical secondary battery according to an embodiment of the present disclosure.
FIG. 2 is a cross-sectional view showing the internal structure of a cylindrical secondary battery according to an embodiment of the present disclosure.
FIGS. 3 and 4 are partial cross-sectional views showing an upper structure of a cylindrical secondary battery according to an embodiment of the present disclosure.
FIGS. 5 and 6 are diagrams showing a coupling structure of a first current collector plate applied to the present disclosure and an electrode assembly.
FIG. 7 is a perspective view of an electrode assembly with a bent uncoated region according to an embodiment of the present disclosure.
FIG. 8 is a diagram showing a process of welding a current collector plate to a bent surface of the uncoated region in the electrode assembly of FIG. 7.
FIG. 9 is a partial cross-sectional view showing a lower structure of a cylindrical secondary battery according to an embodiment of the present disclosure.
FIG. 10 is a bottom view of a cylindrical secondary battery according to an embodiment of the present disclosure.
FIG. 11 is a diagram showing a second current collector plate applied to the present disclosure.
FIG. 12 is a schematic view showing a battery pack according to an embodiment of the present disclosure.
FIG. 13 is a conceptual diagram showing a vehicle according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation. Therefore, the embodiments described herein and illustrations shown in the drawings are just some exemplary embodiments of the present disclosure, but not intended to fully describe the technical aspects of the present disclosure, so it should be understood that a variety of other equivalents and modifications could have been made thereto at the time that the application was filed.

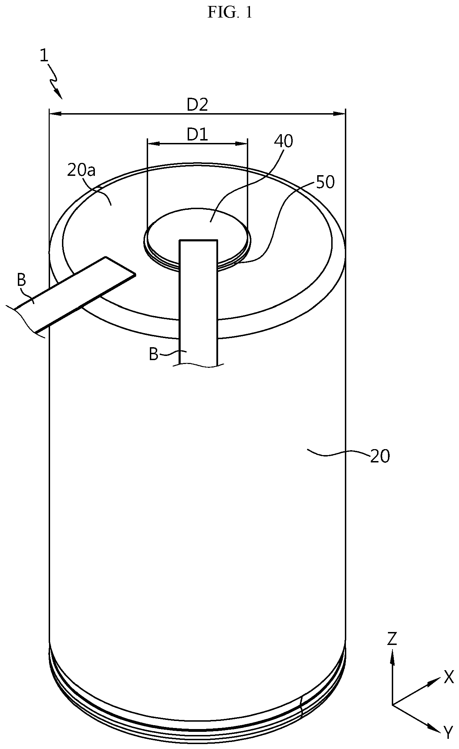

Referring to FIGS. 1 to 3, a cylindrical secondary battery 1 according to an embodiment of the present disclosure includes an electrode assembly 10, a battery can 20, a cap plate 30 and a penetrating terminal 40. In addition to the above-described components, the cylindrical secondary battery 1 may further include an insulation gasket 50 and/or a first current collector plate 60 and/or an insulator 70 and/or a second current collector plate 80 and/or a sealing gasket 90.

The electrode assembly 10 includes a first electrode having a first polarity, a second electrode having a second polarity and a separator between the first electrode and the second electrode. The first electrode corresponds to a positive or negative electrode, and the second electrode corresponds to an electrode having the opposite polarity to the first electrode.

The electrode assembly 10 may have, for example, a jelly-roll shape. That is, the electrode assembly 10 may be manufactured by winding a stack around a winding center C, the stack formed by stacking the first electrode and the second electrode with the separator between the first electrode and the second electrode at least once. In this case, the electrode assembly 10 may include an additional separator on its outer circumferential surface for insulation from the battery can 20.

The first electrode includes a first electrode current collector and a first electrode active material coated on one or two surfaces of the first electrode current collector. The first electrode current collector has a first uncoated region 11 in which the first electrode active material is not coated at one end in the widthwise direction (a direction parallel to the Z axis). The first uncoated region 11 may act as a first electrode tab. The first uncoated region 11 is provided at the upper part in the heightwise direction (the direction parallel to the Z axis) of the electrode assembly 10 received in the battery can 20.

The second electrode includes a second electrode current collector and a second electrode active material coated on one or two surfaces of the second electrode current collector. The second electrode current collector has a second uncoated region 12 in which the second electrode active material is not coated at the other end in the widthwise direction (the direction parallel to the Z axis). The second uncoated region 12 may act as a second electrode tab. The second uncoated region 12 is provided at the lower part in the heightwise direction (the direction parallel to the Z axis) of the electrode assembly 10 received in the battery can 20.

That is, the first uncoated region 11 and the second uncoated region 12 extend and protrude in the opposite directions along the widthwise direction of the electrode assembly 10, i.e., the heightwise direction of the cylindrical secondary battery 1 (the direction parallel to the Z axis).

In the present disclosure, the positive electrode active material coated on the positive electrode plate and the negative electrode active material coated on the negative electrode plate may include any type of active material well-known in the technical field pertaining to the present disclosure without limitations.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M¹ includes at least one element having an average trivalent oxidation state; M² includes at least one element having an average tetravalent oxidation state; 0≤x≤1) disclosed by US6,677,082 and US6,680,143.

In still another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element optionally including F; 0 < a ≤2, 0 ≤ x ≤ 1, 0 ≤ y < 1, 0 ≤ z < 1; the stoichiometric coefficients a, x, y and z are selected to keep the compound electrically neutral), or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used for the negative electrode active material. The carbon material may include low crystalline carbon and high crystalline carbon.

The separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, used singly or a stack of them. In another example, the separator may include a common porous nonwoven fabric, for example, a nonwoven fabric made of high melting point glass fibers and polyethylene terephthalate fibers.

The separator may have a coating layer of inorganic particles on at least one surface thereof. Additionally, the separator itself may be a coating layer of inorganic particles. The particles that form the coating layer may be bonded to each other with a binder to create interstitial volume between adjacent particles.

The inorganic particles may include inorganic particles having the dielectric constant of 5 or more. Non-limiting examples of the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

An electrolyte may be a salt having a structure such as A⁺B⁻. Here, A⁺ includes an alkali metal cation such as Li⁺, Na⁺, K⁺ or a combination thereof. B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may be used by dissolving in an organic solvent. The organic solvent may include at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) or γ-butyrolactone.

Referring to FIGS. 1 to 4, the battery can 20 is an approximately cylindrical container having an open portion on bottom, and for example, is made of a material having conductive properties such as a metal. The material of the battery can 20 may be, for example, aluminum. The side (the outer circumferential surface) and the upper surface of the battery can 20 may be integrally formed. The upper surface (a surface parallel to the X-Y plane) of the battery can 20 has an approximately flat shape. A closed portion is provided opposite the open portion of the battery can 20. The outer surface of the closed portion corresponds to the upper surface of the battery can 20. The battery can 20 receives the electrolyte together with the electrode assembly 10 through the open portion on the bottom.

The battery can 20 is electrically connected to the electrode assembly 10. For example, the battery can 20 is electrically connected to the second uncoated region 12 of the electrode assembly 10. In this case, the battery can 20 has the same polarity as the second uncoated region 12.

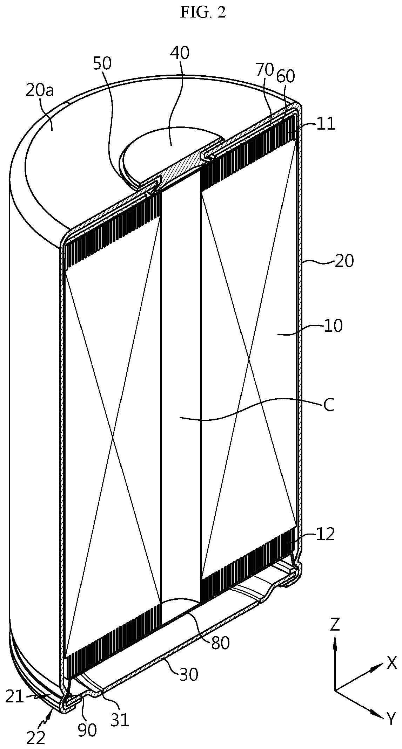

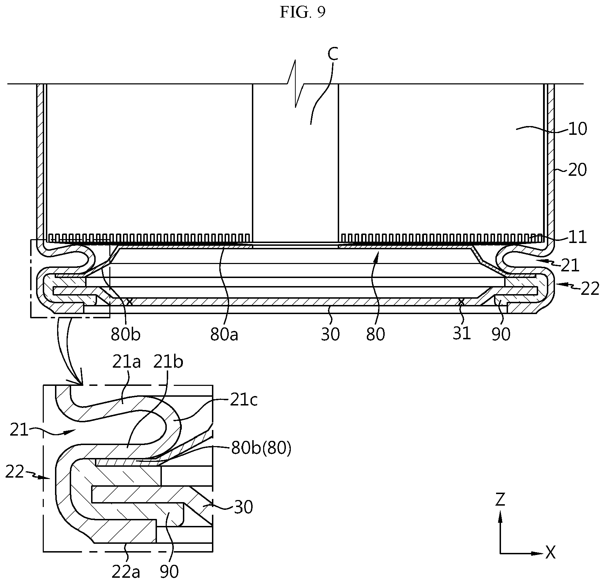

Referring to FIGS. 2 and 9, the battery can 20 may include a beading portion 21 and a crimping portion 22 at the lower end thereof. The beading portion 21 is disposed below the electrode assembly 10. The beading portion 21 is formed on the open portion side of the battery can 20, and is formed by inward beading around the outer circumferential surface of the battery can 20. The beading portion 21 may prevent the electrode assembly 10 having a size approximately corresponding to the width of the battery can 20 from slipping out of the open portion on the bottom of the battery can 20, and act as a support on which the cap plate 30 is seated.

The crimping portion 22 is formed below the beading portion 21. The crimping portion 22 is extended and bent from the beading portion 21 to cover a part of the lower surface of the cap plate 30 around the outer circumferential surface of the cap plate 30 positioned below the beading portion 21. An area 22a of the crimping portion 22 that covers the lower surface of the cap plate 30 may include a flat area.

An upper beading portion 21a and a lower beading portion 21b disposed on and below an innermost part 21c of the beading portion 21 disposed on the innermost side along the beading direction, respectively, may have an asymmetrical shape. The asymmetrical shape may be formed by the compression of the battery can 20 along the heightwise direction (the direction parallel to the Z axis) through a sizing process. The sizing process is a process of fitting the height of the cylindrical battery 1 to the design form factor by compressing the housing 20 along the winding axis direction of the electrode assembly 10.

The lower beading portion 21b may be flat approximately parallel to the closed portion of the battery can 20. In contrast, due to the asymmetrical shape, the upper beading portion 21a may slope upward at least in part along a direction toward the innermost part 21c. Accordingly, the upper beading portion 21a may fix by pushing the bottom of the electrode assembly 10. The beading portion 21 may prevent the electrode assembly 10 having a size approximately corresponding to the inner diameter of the battery can 20 from slipping out of the open portion on the bottom of the housing 20, and act as a support on which the cap plate 30 is seated. The lower beading portion 21b may act as a support for seating and fixing of not only the cap plate 30 but also a can coupling portion 80b of the second current collector 80.

Meanwhile, the battery can 20 may have different thicknesses for each location. The battery can 20 may have the thickness of the sidewall that is smaller than the thickness of the closed portion. The diameter of the electrode assembly 10 may be increased, thereby improving the energy density.

For example, the battery can 20 may have the closed portion, i.e., an area that forms the upper surface in the thickness range of approximately 0.5 mm to 1.0 mm, and more preferably approximately 0.6 mm to 0.8 mm. For example, the battery can 20 may have the sidewall that forms the outer circumferential surface in the thickness range of approximately 0.3 mm to 0.8 mm, and more preferably approximately 0.40 mm to 0.60 mm. According to an embodiment of the present disclosure, the battery can 20 may have a plating layer. In this case, the plating layer may include, for example, nickel (Ni). The thickness of the plating layer may range between approximately 1.5 µm and 6.0 µm.

As the battery can 20 is thinner, the internal space is larger, and the energy density is improved and it is possible to manufacture the cylindrical secondary battery 1 having larger capacity. To the contrary, as the battery can 20 is thicker, it is possible to prevent the spread of flames to adjacent cells in an explosion test, thereby providing a safety advantage.

Meanwhile, referring to FIG. 9, the battery can 20 may have different thicknesses for each location within the area in which the crimping portion 22 is formed. For example, the thickness of the area 22a of the crimping portion 22 that covers the lower surface of the cap plate 30 may be larger than the thickness of the remaining area of the crimping portion 22. This is to prevent the area 22a that covers the lower surface of the cap plate 30 from being easily deformed for the sealing purpose of the battery can 20. When the thickness of the area 22a of the crimping portion 22 that covers the lower surface of the cap plate 30 is larger than the surrounding area, it is possible to prevent the abnormal operation of a venting portion 31 as described below. That is, in case that the fixed part of the cap plate 30 is broken before the rupture of the venting portion 31 in the event of a rise in internal pressure of the battery can 20, a normal venting operation may not be performed. Accordingly, when the thickness of the area 22a of the crimping portion 22 that covers the lower surface of the cap plate 30 is larger than the surrounding area, the venting operation may be normally performed by the increased fixing of the cap plate 30 by the crimping portion 22. For example, when the thickness of the sidewall of the battery can 20 is approximately 0.45 mm, the thickness of the area 22a of the crimping portion 22 that covers the lower surface of the cap plate 30 may be set to approximately 0.70 mm.

Meanwhile, unlike shown in FIG. 9, the entire area of the crimping portion 22 that covers the edge area of the cap plate 30 may be thicker than the remaining sidewall of the battery can 20. Alternatively, the beading portion 21 and the crimping portion 22 may be thicker than the remaining sidewall of the battery can 20. When the total area of the crimping portion 22 or the total area of the beading portion 21 and the crimping portion 22 are thicker than the remaining sidewall, it is possible to maximize the prevention effect of abnormal venting caused by deformation of the battery can 20 that supports the cap plate 30, and in case that the thickness of the battery can 20 increases, the accommodation space of the electrode assembly 10 does not reduce. That is, since the beading portion 21 and/or the crimping portion 22 is located at a lower position (along the Z axis direction) than the accommodation space of the electrode assembly 10, in case that the thickness of the beading portion 21 and/or the crimping portion 22 increases in part or in whole, the accommodation space of the electrode assembly 10 does not reduce, thereby avoiding energy density reduction.

As the plating layer is thinner, it is more susceptible to corrosion, and as the plating layer is thicker, a manufacturing process is more difficult or the likelihood that plating peeling may occur is higher. It is necessary to set the optimal thickness of the battery can 20 and the optimal thickness of the plating layer, taking all the conditions into account. Moreover, it is necessary to control the thickness of the closed portion of the battery can 20 and the thickness of the sidewall, taking all the conditions into account.

Referring to FIGS. 2 and 9, the cap plate 30 may be made of a metal to ensure stiffness. The cap plate 30 is configured to close the open portion on the bottom of the battery can 20. The cap plate 30 forms the lower surface of the cylindrical secondary battery 1. In the cylindrical secondary battery 1 of the present disclosure, the cap plate 30 is non-polar even when the cap plate 30 is made of a metal having conductive properties. Non-polar may represent that the cap plate 30 is electrically insolated from the battery can 20 and the penetrating terminal 40. Accordingly, the cap plate 30 does not act as the positive electrode terminal or the negative electrode terminal. Accordingly, the cap plate 30 does not need to be electrically connected to the electrode assembly 10 and the battery can 20, and the material of the cap plate 30 is not necessarily a conductive metal.

When the battery can 20 of the present disclosure includes the beading portion 21, the cap plate 30 may be seated on the beading portion 21 of the battery can 20. Additionally, when the battery can 20 of the present disclosure includes the crimping portion 22, the cap plate 30 is fixed by the crimping portion 22. The sealing gasket 90 may be positioned between the cap plate 30 and the crimping portion 22 of the battery can 20 to ensure sealability of the battery can 20.

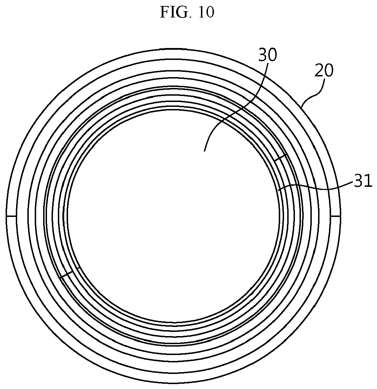

Referring to FIGS. 9 and 10, the cap plate 30 may further include the venting portion 31 to prevent the internal pressure from rising above a preset value due to gas generated in the battery can 20. The venting portion 31 corresponds to an area having a smaller thickness than the other areas in the cap plate 30. The venting portion 31 is structurally weaker than the surrounding area. Accordingly, when the internal pressure of the battery can 20 rises above the predetermined level due to failures or defects in the cylindrical secondary battery 1, the venting portion 31 ruptures to force the generated gas out of the battery can 20. For example, the venting portion 31 may be formed by partially reducing the thickness of the battery can 20 via notching on one or two surfaces of the cap plate 30.

The cylindrical secondary battery 1 according to an embodiment of the present disclosure has a structure in which both the positive electrode terminal and the negative electrode terminal exist at the upper part as described below, and as a consequence, the upper structure is more complex than the lower structure. Accordingly, to smoothly force the generated gas out of the battery can 20, the venting portion 31 may be formed in the cap plate 30 that forms the lower surface of the cylindrical secondary battery 1. As shown in FIG. 9, the lower end of the cap plate 30 is preferably disposed higher than the lower end of the battery can 20. In this case, even when the lower end of the battery can 20 contacts the ground or the bottom of a housing for forming a module or a pack, the cap plate 30 does not contact the ground or the bottom of the housing for forming a module or a pack. Accordingly, it is possible to prevent a phenomenon in which the pressure required for the rupture of the venting portion 31 is different from the design pressure due to the weight of the cylindrical secondary battery 1, thereby allowing for smooth rupture of the venting portion 31.

Meanwhile, when the venting portion 31 has a closed loop shape as shown in FIGS. 9 and 10, as the distance from the center of the cap plate 30 to the venting portion 31 is longer, the venting portion 31 ruptures more easily. When the same venting pressure is applied, as the distance from the center of the cap plate 30 to the venting portion 31 is longer, a force applied to the venting portion 31 is larger, and thus the venting portion 31 ruptures more easily. Additionally, as the distance from the center of the cap plate 30 to the venting portion 31 is longer, it is possible to force venting gas out more smoothly. From this perspective, the venting portion 31 may be preferably formed along the periphery of an approximately flat area protruding downward (in the downward direction on the basis of FIG. 9) from the edge area of the cap plate 30.

Although FIG. 10 of the present disclosure shows the venting portion 31 continuously formed in an approximately circular shape on the cap plate 30, the present disclosure is not limited thereto. The venting portion 31 may be discontinuously formed in an approximately circular shape on the cap plate 30, and may be formed in the shape of an approximately straight line or other shapes.

Referring to FIGS. 1 to 3, the penetrating terminal 40 is made of a metal having conductive properties, and passes through the upper surface of the battery can 20, i.e., the surface disposed on the opposite side to the open portion of the battery can 20 (the surface parallel to the X-Y plane). For example, the penetrating terminal 40 is electrically connected to the first uncoated region 11 of the electrode assembly 10. In this case, the penetrating terminal 40 has the first polarity. Accordingly, the penetrating terminal 40 may act as a first electrode terminal in the cylindrical secondary battery 1 of the present disclosure. When the penetrating terminal 40 has the first polarity as described above, the penetrating terminal 40 is electrically insulated from the battery can 20 having the second polarity. The electrical insulation between the penetrating terminal 40 and the battery can 20 may be achieved by a variety of methods. For example, insulation may be achieved by interposing the insulation gasket 50 as described below between the penetrating terminal 40 and the battery can 20. Alternatively, insulation may be achieved by forming an insulating coating layer in a part of the penetrating terminal 40. Alternatively, the penetrating terminal 40 may be structurally firmly fixed to prevent the contact between the penetrating terminal 40 and the battery can 20. Alternatively, two or more of the above-described methods may be applied together.

The penetrating terminal 40 includes a terminal exposure portion 41 and a terminal insertion portion 42. The terminal exposure portion 41 is exposed through the battery can 20. The terminal exposure portion 41 may be disposed at approximately the center of the upper surface of the battery can 20. The maximum width of the terminal exposure portion 41 may be larger than the maximum width of a hole formed in the battery can 20 by the penetration of the penetrating terminal 40. The terminal insertion portion 42 may be electrically connected to the first uncoated region 11 through approximately the center of the upper surface of the battery can 20. The edge area of the terminal insertion portion 42 may be rivet-coupled onto the inner surface of the battery can 20. That is, the edge area of the terminal insertion portion 42 may have a bent shape toward the inner surface of the battery can 20, and accordingly the maximum width of the end of the terminal insertion portion 42 may be larger than the maximum width of the hole of the battery can 20 formed by the penetration of the terminal insertion portion 42.

Meanwhile, when the cylindrical secondary battery 1 of the present disclosure includes the first current collector plate 60, the central area of the terminal insertion portion 42 may be coupled to the first current collector plate 60. The central area of the terminal insertion portion 42 may have, for example, an approximately cylindrical shape. The diameter of the bottom of the central area of the terminal insertion portion 42 may be set to approximately 6.2 mm.

The coupling between the bottom of the central area of the terminal insertion portion 42 and the first current collector plate 60 may be accomplished by, for example, laser welding or ultrasonic welding.

The laser welding may be performed by irradiating a laser through a hole formed at the winding center C of the electrode assembly 10 to form a laser welding line on one surface of the first current collector plate 60. The laser welding line on one surface of the first current collector plate 60 may be formed in the shape of an approximately concentric circle with the bottom of the central area of the terminal insertion portion 42 on one surface of the first current collector plate 60. The welding line may be continuously or partially discontinuously formed.

The concentric circle-shaped welding line may have the diameter of approximately 60% to 80% relative to the diameter of the bottom of the central area of the terminal insertion portion 42. For example, when the diameter of the bottom of the central area of the terminal insertion portion 42 is approximately 6.2 mm, the diameter of the circle drawn by the welding line may be preferably approximately 4.0 mm or more. When the diameter of the circle drawn by the welding line is too small, the joining strength by welding may be insufficient. To the contrary, when the diameter of the circle drawn by the welding line is too large, the damage risk of the electrode assembly 10 by heat and/or a weld spatter may increase. The ultrasonic welding may be performed by inserting a welding rod for the ultrasonic welding through the hole formed at the winding center C of the electrode assembly 10. The welded part formed by the ultrasonic welding is formed within the contact interface between the bottom of the central area of the terminal insertion portion 42 and the first current collector plate 60. The welded part formed by the ultrasonic welding may be formed wholly in the concentric circle having the diameter of approximately 30% to 80% relative to the bottom of the central area of the terminal insertion portion 42. For example, when the diameter of the bottom of the central area of the terminal insertion portion 42 is approximately 6.2 mm, the diameter of the circle drawn by the welded part by the ultrasonic welding may be preferably approximately 2.0 mm or more. When the diameter of the circle drawn by the welded part by the ultrasonic welding is too small, the joining strength by the welding may be insufficient. To the contrary, when the diameter of the circle drawn by the welded part by the ultrasonic welding is too large, the damage risk of the electrode assembly 10 by heat and/or vibration may increase.

In an embodiment of the present disclosure, the upper surface of the battery can 20 and the penetrating terminal 40 exposed through the battery can 20 have the opposite polarities and face the same direction. Additionally, a step may be formed between the penetrating terminal 40 and the upper surface of the battery can 20. Specifically, when the entire upper surface of the battery can 20 has a flat shape or protrudes upward from the center, the terminal exposure portion 41 of the penetrating terminal 40 may protrude upward above the upper surface of the battery can 20. On the contrary, when the upper surface of the battery can 20 is concavely recessed downward from the center, i.e., in a direction toward the electrode assembly 10, the upper surface of the battery can 20 may protrude upward above the terminal exposure portion 41 of the electrode terminal 40.

Meanwhile, when the upper surface of the battery can 20 is concavely recessed downward from the center, i.e., in a direction toward the electrode assembly 10, the upper surface of the battery can 20 and the upper surface of the terminal exposure portion 41 may form the same plane according to the recessed depth and the thickness of the terminal exposure portion 41 of the electrode terminal 40. In this case, a step may not be formed between the upper surface of the battery can 20 and the terminal exposure portion 41.

The insulation gasket 50 is interposed between the battery can 20 and the penetrating terminal 40 to prevent the contact between the battery can 20 and the penetrating terminal 40 having the opposite polarities. Accordingly, the upper surface of the battery can 20 having an approximately flat shape may act as a second electrode terminal of the cylindrical secondary battery 1.

The insulation gasket 50 includes a gasket exposure portion 51 and a gasket insertion portion 52. The gasket exposure portion 51 is positioned between the terminal exposure portion 41 of the penetrating terminal 40 and the battery can 20. The gasket insertion portion 52 is positioned between the terminal insertion portion 42 of the penetrating terminal 40 and the battery can 20. The gasket insertion portion 52 may come into close contact with the inner surface of the battery can 20 as the shape of the gasket insertion portion 52 is changed together during the riveting of the terminal insertion portion 42. For example, the insulation gasket 50 may be made of resin having insulating properties.

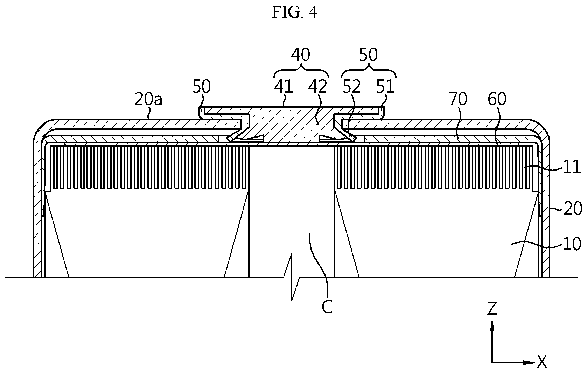

Referring to FIG. 4, the gasket exposure portion 51 of the insulation gasket 50 may be extended to cover the outer circumferential surface of the terminal exposure portion 41 of the penetrating terminal 40. When the insulation gasket 50 covers the outer circumferential surface of the penetrating terminal 40 as described above, it is possible to prevent a short circuit from occurring in the process of coupling an electrical connection component such as a busbar to the upper surface of the battery can 20 and/or the penetrating terminal 40. Although not shown in the drawing, the gasket exposure portion 51 of the insulation gasket 50 may be extended to cover not only the outer circumferential surface of the terminal exposure portion 41 but also at least a part of the upper surface of the terminal exposure portion 41 together.

When the insulation gasket 50 is made of resin, the insulation gasket 50 may be coupled to the battery can 20 and the penetrating terminal 40 by heat fusion. In this case, it is possible to enhance sealability at the coupling interface between the insulation gasket 50 and the penetrating terminal 40 and the coupling interface between the insulation gasket 50 and the battery can 20. Meanwhile, when the gasket exposure portion 51 of the insulation gasket 50 is extended to the upper surface of the terminal exposure portion 41, the penetrating terminal 40 may be coupled to the insulation gasket 50 by insert injection molding.

According to an embodiment of the present disclosure, the insulation gasket 50, the insulator 70 and the sealing gasket 90 may be formed from the same material. However, this is not essential. The thickness of the insulation gasket 50 and the thickness of the insulator 70 may be equal. However, this is not essential. When their thicknesses are different, the insulator 70 may be thinner than the insulation gasket 50, and vice versa.

The entire remaining area except the area occupied by the penetrating terminal 40 and the insulation gasket 50 on the upper surface of the battery can 20 corresponds to the second electrode terminal 20a having the opposite polarity to the penetrating terminal 40. Alternatively, in the present disclosure, when the insulation gasket 50 is omitted and an insulation coating layer is formed in the penetrating terminal 40 in part, the entire remaining area except the area occupied by the penetrating terminal 40 having the insulation coating layer on the upper surface of the battery can 20 may act as the second electrode terminal 20a.

The cylindrical sidewall of the battery can 20 may be formed as a one piece with the second electrode terminal 20a to prevent discontinuity with the second electrode terminal 20a. The connection from the sidewall of the battery can 20 to the second electrode terminal 20a may be a smooth curve. However, the present disclosure is not limited thereto and the connected part may include at least one corner having a predetermined angle.

Referring to FIGS. 2 to 4, the first current collector plate 60 may be coupled on the electrode assembly 10. The first current collector plate 60 is made of a metal having conductive properties, and is connected to the first uncoated region 11. Although not shown in the drawing, the first current collector plate 60 may include a plurality of concave-convex patterns radially formed on the lower surface thereof. When the concave-convex patterns are formed, the concave-convex patterns may be pushed into the first uncoated region 11 by pressing the first current collector plate 60.

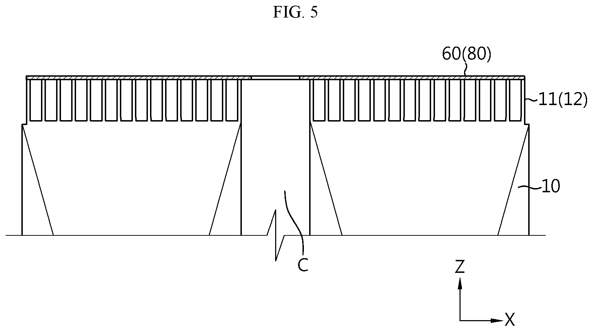

Referring to FIG. 5, the first current collector plate 60 may be coupled to the end of the first uncoated region 11. The coupling between the first uncoated region 11 and the first current collector plate 60 may be accomplished, for example, by laser welding. The laser welding may be performed by partially melting the base material of the first current collector plate 60, and may be performed with solders for welding interposed between the first current collector plate 60 and the first uncoated region 11. In this case, the solder preferably has a lower melting point than the first current collector plate 60 and the first uncoated region 11.

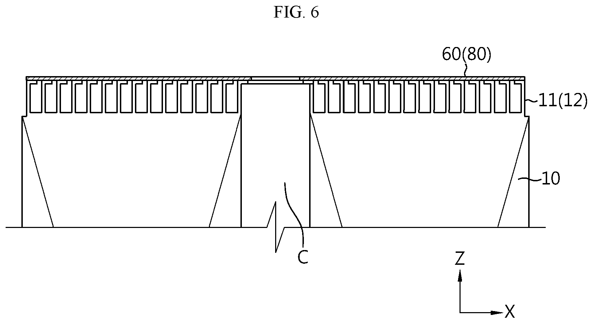

Referring to FIG. 6, the first current collector plate 60 may be coupled onto a coupling surface formed by bending the end of the first uncoated region 11 in a direction parallel to the first current collector plate 60. For example, the bent direction of the first uncoated region 11 may be a direction toward the winding center C of the electrode assembly 10. When the first uncoated region 11 has the bent shape as described above, the space occupied by the first uncoated region 11 reduces, resulting in the improved energy density. Additionally, it is possible to increase the coupling strength and reduce the resistance due to the increased coupling area between the first uncoated region 11 and the first current collector plate 60.

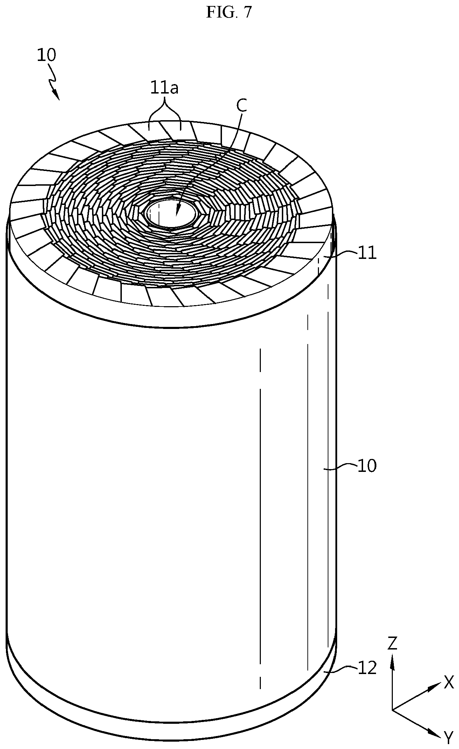

FIG. 7 shows an exemplary shape of the bent structure of the uncoated regions 11, 12 of the electrode assembly 10 of the present disclosure. The following description is made based on the first electrode described above, but the structure of the first electrode may be substantially equally applied to the second electrode.

Referring to FIGS. 2 and 7, the first electrode may include the first electrode current collector in the shape of a sheet of foil made of a conductive material, the first active material layer on at least one surface of the first electrode current collector, and the first uncoated region 11 in which the active material is not coated at the end of the long side of the first electrode current collector.

The first uncoated region 11 may include a plurality of segments 11a by notching. For example, the first uncoated region 11 may be bent from the outer circumference to the core along the radial direction of the electrode assembly 10. As shown in FIG. 7, when the segments 11a of the uncoated region 11 are formed by the notching of the first uncoated region 11, the plurality of segments 11a may be bent, for example, from the outer circumference of the electrode assembly 10 to the core.

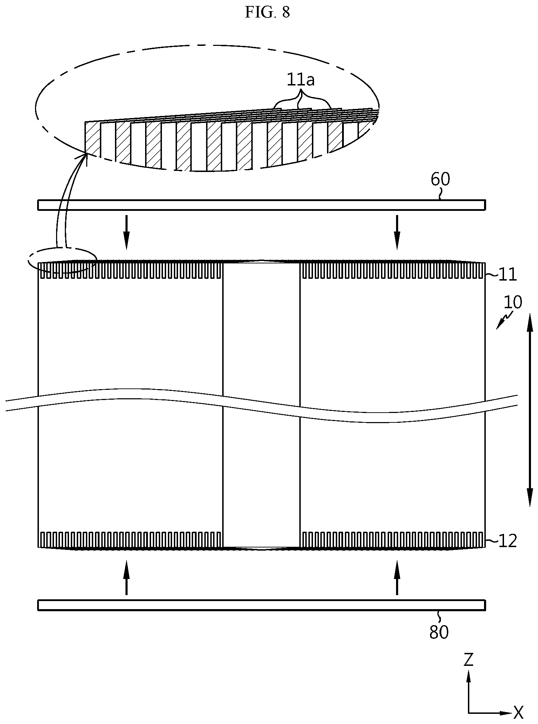

Referring to FIGS. 7 and 8, the current collector plates 60, 80 may be coupled onto a coupling surface formed by bending the uncoated regions 11, 12. In this instance, the bent segments 11a may overlap in multilayer. In this case, the current collector plates 60, 80 may be coupled to an area in which the plurality of segments 11a overlap in multilayer. Meanwhile, the electrode assembly 10 may have a welding target area including a uniform number of overlapping layers of the segments 11a of the first uncoated region 11 along the radial direction of the electrode assembly 10. Since the number of overlapping layers is approximately at the maximum in the area, welding between the current collector plates 60, 80 and the uncoated regions 11, 12 may be preferably performed in the area. For example, in case that laser welding is applied, it is possible to prevent damage to the electrode assembly 10 due to the laser beam passing through the uncoated regions 11, 12 when increasing the output of the laser to improve the weld quality. Additionally, it is possible to effectively prevent the filtration of impurities, for example, weld spatter, into the electrode assembly 10.

Referring to FIGS. 2 to 4, the insulator 70 is provided between the top of the electrode assembly 10 and the inner surface of the battery can 20 or between the first current collector plate 60 coupled on the electrode assembly 10 and the inner surface of the battery can 20. The insulator 70 prevents the contact between the first uncoated region 11 and the battery can 20 and/or the contact between the first current collector plate 60 and the battery can 20. The insulator 70 may be positioned between the top of the outer circumferential surface of the electrode assembly 10 and the inner surface of the battery can 20. The first current collector plate 60 may be a plate that is extended across the top of the outer circumferential surface of the electrode assembly 10 in whole. However, the present disclosure is not limited thereto, and the first current collector plate 60 may be extended across the top of the outer circumferential surface of the electrode assembly 10 in part.

When the cylindrical secondary battery 1 according to an embodiment of the present disclosure includes the insulator 70, the terminal insertion portion 42 of the penetrating terminal 40 is coupled to the first current collector plate 60 or the first uncoated region 11 through the insulator 70.

The insulator 70 may have an opening close to the winding center C. The opening may allow the terminal insertion portion 42 of the penetrating terminal 40 to come into direct contact with the first current collector plate 60.

In an embodiment of the present disclosure, the terminal insertion portion 42 may have a circular shape on the plane, but is not limited thereto. The terminal insertion portion 42 may have selectively a polygonal shape, a star-like shape, a shape having a leg extended from the center, etc.

Referring to FIGS. 2 and 9, the second current collector plate 80 may be coupled below the electrode assembly 10. The second current collector plate 80 may be made of a metal having conductive properties and may be connected to the second uncoated region 12. Additionally, the second current collector plate 80 is electrically connected to the battery can 20. As shown in FIG. 9, the second current collector plate 80 may be interposed and fixed between the inner surface of the battery can 20 and the sealing gasket 90. Alternatively, the second current collector plate 80 may be welded to the inner wall of the battery can 20.

For example, the second current collector plate 80 may include an uncoated region coupling portion 80a and the can coupling portion 80b. The uncoated region coupling portion 80a may be coupled to the second uncoated region 12 and electrically connected to the electrode assembly 10. The can coupling portion 80b may be coupled to the battery can 20, for example, by welding. The can coupling portion 80b may be coupled to, for example, the beading portion 21 of the battery can 20. The can coupling portion 80b may be coupled to the flat area of the lower beading portion 21b. The can coupling portion 80b may be interposed between the lower beading portion 21b and the sealing gasket 90.

Although not shown in the drawing, the second current collector plate 80 may include a plurality of concave-convex patterns radially formed on one surface thereof. When the concave-convex patterns are formed, the concave-convex patterns may be pushed into the second uncoated region 12 by pressing the second current collector plate 80.

Referring to FIG. 5, the second current collector plate 80 is coupled to the end of the second uncoated region 12. The coupling between the second uncoated region 12 and the second current collector plate 80 may be accomplished, for example, by laser welding. The laser welding may be performed by partially melting the base material of the second current collector plate 80, and may be performed with solders for welding interposed between the second current collector plate 80 and the second uncoated region 12. In this case, the solder preferably has a lower melting point than the second current collector plate 80 and the second uncoated region 12.

Referring to FIG. 6, the second current collector plate 80 may be coupled onto a coupling surface formed by bending the end of the second uncoated region 12 in a direction parallel to the second current collector plate 80. For example, the bent direction of the second uncoated region 12 may be a direction toward the winding center C of the electrode assembly 10. When the second uncoated region 12 has the bent shape as described above, the space occupied by the second uncoated region 12 reduces, resulting in the improved energy density. Additionally, it is possible to increase the coupling strength and reduce the resistance due to the increased coupling area between the second uncoated region 12 and the second current collector plate 80.

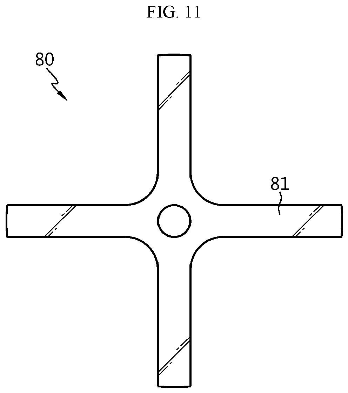

Referring to FIGS. 9 and 11, the second current collector plate 80 may include a plurality of sub-plates 81 extended radially from the center and spaced apart from each other. In this case, each of the plurality of sub-plates 81 is coupled to the second uncoated region 12 and the battery can 20.

When the second current collector plate 80 includes the plurality of sub-plates 81 spaced apart from each other as described above, the second current collector plate 80 partially covers the lower surface of the electrode assembly 10. Accordingly, it is possible to ensure a sufficient space for gas generated from the electrode assembly 10 to move to the cap plate 30, and achieve smooth gas venting below the cylindrical secondary battery 1. Meanwhile, the structure of the second current collector plate 80 including the plurality of sub-plates 81 as described above may be equally applied to the first current collector plate 60 described previously.

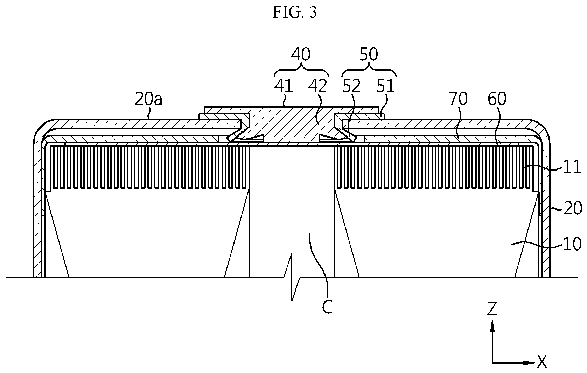

Referring to FIGS. 3 and 9, the cylindrical secondary battery 1 according to an embodiment of the present disclosure includes the penetrating terminal 40 having the first polarity and the second electrode terminal 20a electrically insulated from the penetrating terminal 40 and having the second polarity together on one side in its lengthwise direction (the direction parallel to the Z axis). That is, as the cylindrical secondary battery 1 according to an embodiment of the present disclosure includes the pair of electrode terminals 30, 20a disposed in the same direction, in electrically connecting the plurality of cylindrical secondary batteries 1, it is possible to place the electrical connection component such as a busbar on only one side of the cylindrical secondary battery 1. This may lead to a simple battery pack structure and improved energy density.

Additionally, since the cylindrical secondary battery 1 has a structure of using one surface of the battery can 20 having an approximately flat shape as the second electrode terminal 20a, it is possible to ensure a sufficient joining area in joining the electrical connection component such as a busbar to the second electrode terminal 20a. Accordingly, the cylindrical secondary battery 1 may ensure sufficient joining strength between the electrical connection component and the second electrode terminal 20a, and reduce the resistance at the welded part down to a desirable level.

Referring to FIG. 1, the busbar B is connected to each of the first electrode terminal 40 and the second electrode terminal 20a of the cylindrical secondary battery 1 of the present disclosure. In each of the first electrode terminal 40 and the second electrode terminal 20a, to ensure a sufficient area for coupling of the busbar B, an area of the first electrode terminal 40 exposed through the battery can 20, i.e., the width D1 of the upper surface of the terminal exposure portion 41 may be set to approximately 10% to 60% of the width D2 of the second electrode terminal 20a, i.e., the upper surface of the battery can 20.

Preferably, the cylindrical battery cell may be, for example, a cylindrical battery cell of which a ratio of form factor (a value obtained by dividing the diameter of the cylindrical battery cell by its height, i.e., defined as a ratio of diameter Φ to height H) is larger than approximately 0.4.

Here, the form factor refers to a value indicating the diameter and height of the cylindrical battery cell. The cylindrical battery cell according to an embodiment of the present disclosure may be, for example, 46110 cell, 48750 cell, 48110 cell, 48800 cell, 46800 cell. In the value indicating the form factor, the former two numbers indicate the diameter of the cell, the next two numbers indicate the height of the cell, and the last number 0 indicates that the cross section of the cell is circular.

The battery cell according to an embodiment of the present disclosure may be a cylindrical battery cell having an approximately cylindrical shape with the diameter of approximately 46 mm, the height of approximately 110 mm and the ratio of form factor of approximately 0.418.

The battery cell according to another embodiment may be a cylindrical battery cell having an approximately cylindrical shape with the diameter of approximately 48 mm, the height of approximately 75 mm and the ratio of form factor of approximately 0.640.

The battery cell according to another embodiment may be a cylindrical battery cell having an approximately cylindrical shape with the diameter of approximately 48 mm, the height of approximately 110 mm and the ratio of form factor of approximately 0.418.

The battery cell according to another embodiment may be a cylindrical battery cell having an approximately cylindrical shape with the diameter of approximately 48 mm, the height of approximately 80 mm, and the ratio of form factor of approximately 0.600.

The battery cell according to another embodiment may be a cylindrical battery cell having an approximately cylindrical shape with the diameter of approximately 46 mm, the height of approximately 80 mm, and the ratio of form factor of approximately 0.575.

Conventionally, battery cells having the ratio of form factor of approximately 0.4 or less have been used. That is, for example, 18650 cell and 21700 cell have been used. In the case of 18650 cell, the diameter is approximately 18 mm, the height is approximately 65 mm, and the ratio of form factor is approximately 0.277. In the case of 21700 cell, the diameter is approximately 21 mm, the height is approximately 70 mm, and the ratio of form factor is approximately 0.300.

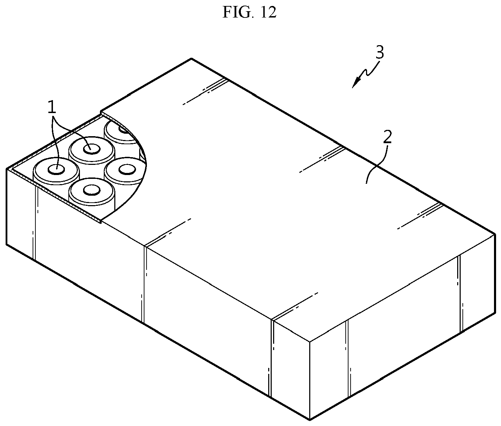

Referring to FIG. 12, a battery pack 3 according to an embodiment of the present disclosure includes a secondary battery assembly including a plurality of cylindrical secondary batteries 1 electrically connected according to an embodiment of the present disclosure as described above and a pack housing 2 in which the secondary battery assembly is received. For convenience of illustration in the drawings, the illustration of components such as a busbar for electrical connection, a cooling unit and a power terminal is omitted in the drawings of the present disclosure.

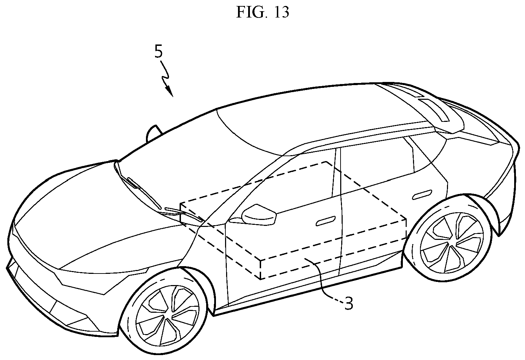

Referring to FIG. 13, a vehicle 5 according to an embodiment of the present disclosure may be, for example, an electric vehicle, a hybrid electric vehicle or a plugin hybrid electric vehicle, and includes the battery pack 3 according to an embodiment of the present disclosure. The vehicle 5 includes a four-wheeler and a two-wheeler. The vehicle 5 operates by the power supplied from the battery pack 3 according to an embodiment of the present disclosure.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the scope of the appended claims and equivalents thereto.

### [Description of Reference Numerals]

5: Vehicle
3: Battery pack
2: Pack housing
1: Cylindrical secondary battery
10: Electrode assembly
C: Winding center
11: First uncoated region
12: Second uncoated region
20: Battery can
21: Beading portion
22: Crimping portion
30: Cap plate
31: Venting portion
40: Penetrating terminal
41: Terminal portion
42: Insertion portion
50: Insulation gasket
60: First current collector plate
70: Insulator
80: Second current collector plate
81: Sub-plate
90: Sealing gasket

## Claims

1. A cylindrical secondary battery, comprising:
an electrode assembly including a first uncoated region having a first polarity and a second uncoated region having a second polarity;
a battery can accommodating the electrode assembly, the battery can electrically connected to the second uncoated region and having different thicknesses for each location;
a penetrating terminal electrically connected to the first uncoated region through a surface of the battery can; and
a cap plate configured to close an open portion of the battery can.

2. The cylindrical secondary battery according to claim 1, wherein the battery can includes:
a beading portion formed on the open portion side of the battery can and formed by inward beading around an outer circumferential surface of the battery can; and
a crimping portion formed below the beading portion and configured to fix the cap plate.

3. The cylindrical secondary battery according to claim 2, wherein the crimping portion is disposed around an edge area of the cap plate, and is extended and bent to cover at least a part of a lower surface of the cap plate.

4. The cylindrical secondary battery according to claim 3, further comprising:
a sealing gasket interposed between the crimping portion of the battery can and the cap plate.

5. The cylindrical secondary battery according to claim 3, wherein an area of the crimping portion that covers the lower surface of the cap plate is thicker than a remaining area of the crimping portion.

6. The cylindrical secondary battery according to claim 3, wherein an area of the crimping portion that cover the lower surface of the cap plate includes a flat area.

7. The cylindrical secondary battery according to claim 3, wherein a total area of the crimping portion that covers the edge area of the cap plate is thicker than a remaining sidewall of the battery can.

8. The cylindrical secondary battery according to claim 3, wherein the beading portion and the crimping portion are thicker than a remaining sidewall of the battery can.

9. The cylindrical secondary battery according to claim 1, wherein a sidewall of the battery can is thinner than a closed portion of the battery can.

10. The cylindrical secondary battery according to claim 1, wherein the penetrating terminal is disposed at a center of a surface of the battery can disposed opposite the open portion.

11. The cylindrical secondary battery according to claim 1, wherein the penetrating terminal includes:
a terminal exposure portion extending outward from the battery can; and
a terminal insertion portion penetrating an upper surface of the battery can.

12. The cylindrical secondary battery according to claim 1, further comprising:
an insulation gasket interposed between the battery can and the penetrating terminal to electrically insulate the penetrating terminal from the battery can.

13. The cylindrical secondary battery according to claim 12, wherein the insulation gasket includes:
a gasket exposure portion extending outward from the battery can; and
a gasket insertion portion penetrating an upper surface of the battery can.

14. The cylindrical secondary battery according to claim 1, wherein the penetrating terminal is rivet-coupled onto an inner surface of the battery can.

15. The cylindrical secondary battery according to claim 1, further comprising:
a first current collector plate having a first surface coupled to the first uncoated region and a second surface coupled to the penetrating terminal.

16. The cylindrical secondary battery according to claim 15, wherein the penetrating terminal includes:
a terminal exposure portion extending outward from the battery can; and
a terminal insertion portion penetrating an upper surface of the battery can.

17. The cylindrical secondary battery according to claim 16, wherein a central area of the terminal insertion portion is coupled to the first current collector plate.

18. The cylindrical secondary battery according to claim 15, further comprising:
an insulator interposed between the first current collector plate and the battery can.

19. The cylindrical secondary battery according to claim 18, wherein the penetrating terminal is coupled to the first current collector plate through the insulator.

20. The cylindrical secondary battery according to claim 1, wherein at least one of the first uncoated region or the second uncoated region is bent toward a winding center of the electrode assembly.

21. The cylindrical secondary battery according to claim 1, wherein the cap plate includes a venting portion which ruptures to force gas out when an internal pressure of the battery can rises above a predetermined level.

22. The cylindrical secondary battery according to claim 1, wherein the cap plate is electrically insulated from the electrode assembly and is non-polar.

23. A battery pack, comprising:
a plurality of cylindrical secondary batteries according to any one of claims 1 to 22; and
a pack housing accommodating the plurality of cylindrical secondary batteries.

24. A vehicle comprising the battery pack according to claim 23.
